# FASCICULE DE BREVET EUROPEEN

(11) **EP 3 481 890 B1**
(45) Date de publication et mention de la délivrance du brevet: **29.01.2020**
(21) Numéro de dépôt: 17745844.5
(22) Date de dépôt: 10.07.2017
(51) Int. Cl.: C08G 69/26, B32B 27/34

(54) **STRUCTURE BARRIÈRE À BASE DE COPOLYAMIDE BACT/XT DE HAUTE TEMPÉRATURE DE TRANSITION VITREUSE**
AUS BACT/XT-COPOLYAMID MIT MIT HOHER GLASÜBERGANGSTEMPERATUR HERGESTELLTE BARRIERESTRUKTUR
BARRIER STRUCTURE MADE FROM BACT/XT COPOLYAMIDE WITH A HIGH GLASS TRANSITION TEMPERATURE

(30) Priorité: 11.07.2016 FR 1656623
(43) Date de publication de la demande: 15.05.2019
(73) Titulaire: Arkema France, 92700 Colombes (FR)
(72) Inventeur: CAPELOT, Mathieu, 27300 Bernay (FR); DUFAURE, Nicolas, 27300 Bernay (FR); BRIFFAUD, Thierry, 27300 Bernay (FR)
(86) Numéro de dépôt international: PCT/FR2017/051871
(87) Numéro de publication internationale: WO 2018/011493

(56) Documents cités:
- EP-A1- 1 860 134
- DE-A1- 2 256 214
- FR-A1- 2 117 978
- FR-A1- 2 189 448

## Description

### Domaine de l'invention

La présente invention concerne une structure barrière à base de copolyamide BACT/XT de haute Tg dépourvue de fibres de renfort. Cette structure peut être soit constituée d'une seule couche de ce polyphtalamide soit comprendre une couche de polyphtalamide BACT/XT et au moins une couche d'un autre matériau.

Cette structure barrière est utile pour des objets destinés au stockage et/ou transport de fluides, tels que des bouteilles, réservoirs, conteneurs, tuyaux et récipients de toute sorte. Cette structure peut aussi se présenter sous forme de films avec lesquels on fait par exemple des emballages qui nécessitent des propriétés barrière à des fluides tels que des gaz. Tous ces objets présentent de bonnes propriétés barrière, c'est-à-dire très peu perméable aux fluides, notamment automobiles, en particulier aux carburants.

L'invention concerne aussi l'utilisation d'un copolyamide BACT/XT de haute Tg pour la fabrication d'une structure, notamment multicouche, comprenant au moins une couche barrière comprenant ledit copolyamide BACT/XT.

L'invention concerne aussi l'utilisation de ces structures et de ces objets.

### L'art antérieur et le problème technique

Quel que soit le fluide transportés ou stocké dans des objets tels que des bouteilles, réservoirs, conteneurs, tuyaux et récipients de toute sorte, le matériau en contact direct avec le fluide ne doit pas être perméable à celui-ci, qu'il s'agisse d'un liquide ou d'un gaz.

Ainsi, dans le domaine de l'automobile, et des transports en général, la composition des carburants est en constante évolution, notamment pour des raisons écologiques, ce qui se traduit par l'arrivée progressive des bio-carburants sur le marché. Ces carburants sont plus agressifs. Par conséquent, il s'avère indispensable d'améliorer la qualité des pièces thermoplastiques en contact avec ces nouveaux carburants tels que les tuyaux de transport d'essence.

Pour des raisons de sécurité et de préservation de l'environnement les constructeurs d'automobiles imposent à ces tuyaux à la fois des caractéristiques mécaniques comme la résistance à l'éclatement et la flexibilité avec une bonne tenue aux chocs à froid (-40°C) ainsi qu'à température élevée (125°C), et également une très faible perméabilité aux hydrocarbures et à leurs additifs, en particulier les alcools comme le méthanol et l'éthanol. Ces tubes doivent aussi avoir une bonne tenue aux carburants et aux huiles de lubrification du moteur.

La demande WO 2014/064375 concerne une composition de ou pour un matériau composite thermoplastique avec une matrice en polyamide (PA) semi-cristallin de température de transition vitreuse Tg d'au moins 90°C et de température de fusion Tf inférieure ou égale à 280°C ainsi que des pièces mécaniques ou de structure à base dudit matériau, l'utilisation de la composition de l'invention pour des pièces de matériau composite pour des applications dans les domaines de : l'automobile, ferroviaire, marin, transport routier, de l'éolien, du sport, aéronautique et spatial, du bâtiment, des panneaux et des loisirs.

Cette composition peut être utilisée pour la fabrication de pièces mécaniques concernant des applications dans le domaine de l'automobile, mais il n'est pas fait mention dans cette demande de structure comprenant une couche barrière à un fluide, en particulier un carburant. Par ailleurs, cette composition comprend toujours des fibres renforts.

EP 1988113 décrit des compositions de moulage à base d'un copolyamide 10T/6T avec :
- 40 à 95% mol de 10T
- 5 à 40% de 6T.

EP 1988113 est silencieux sur les propriétés barrière de structures constituées d'une couche de ces compositions.

EP 1741553 décrit une structure multicouche comprenant deux couches ou plus comprenant au moins une couche (a) comprenant (A) un polyamide aliphatique et une couche (b) comprenant un polyamide semi-aromatique comprenant au moins 60% en mole de diamine aliphatique ayant de 9 à 13 atomes de carbone et au moins 50% en mole de d'acide téréphtalique, la couche (b) étant la couche intérieure.

EP 1741553 est totalement silencieux sur les propriétés barrière d'une telle structure.

EP1860134 décrit une résine de polyamide semi-aromatique comprenant des unités acides dicarboxyliques dans lesquelles de 50 à 100% en moles des unités acides dicarboxyliques sont des unités acide dicarboxylique aromatique, et des unités diamines dans lesquelles de 60 à 100% des unités diamines sont des unités diamines aliphatiques ayant de 9 à 13 atomes de carbone, ledit polyamide semi-aromatique présentant un rapport de fins de chaînes amine/fins de chaînes acide supérieur ou égal à 6.

EP 1860134 exemplifie notamment des composés 9T/9'T (ou 8MT/9T) et montre que la résistance à l'alcool est réduite lorsque ledit rapport est inférieur à 6 et notamment de 4 ou moins.

La demande internationale WO 10/015786 concerne un copolyamide de formule A/10.T, dans laquelle :
A est choisi parmi un motif obtenu à partir d'un acide aminocarboxylique, un motif obtenu à partir d'un lactame et un motif répondant à la formule (diamine en Ca).(diacide (cyclo)aliphatique en Cb), avec a représentant le nombre d'atome de carbone de la diamine et b représentant le nombre d'atomes de carbone du diacide, a et b étant chacun compris entre 4 et 36 ;
caractérisé en ce qu'il présente un indice de polymolécularité, noté Ip inférieur ou égal à 3,5, mesuré par chromatographie de perméation de gel (en langue anglaise : Gel Permeation Chromatography).

WO 10/015786 est totalement silencieux sur les propriétés barrière d'une telle structure.

Par ailleurs, ces polyamides restent encore à améliorer, notamment en termes de cristallinité, de cinétique de cristallisation en vue d'améliorer la tenue en température du copolyamide, de processabilité ou encore d'améliorer leurs propriétés de tenue au choc ainsi que leurs propriétés barrières.

Ainsi, il existe un réel besoin de trouver des polyphtalamides présentant des propriétés améliorées, notamment en termes de propriétés barrières.

### Brève description de l'invention

De façon surprenante, il a été trouvé que ces besoins sont atteints avec une structure comprenant au moins une couche comprenant un copolyamide BACT/XT, dans lequel :
- BACT est une unité à motif amide présente à un taux molaire allant de 20 à 70%, de préférence de 25 à 60%, plus préférentiellement de 35 à 55%, où BAC est choisi parmi la 1,3-bis (aminométhyle) cyclohexyle (1,3 BAC), la 1,4-bis (aminométhyle) cyclohexyle (1,4 BAC) et un mélange de ceux-ci, et T est l'acide téréphtalique,
- XT est une unité à motif amide présente à un taux molaire allant de 30 à 80%, de préférence de 40 à 75%, plus préférentiellement de 45 à 65%, où X est une diamine aliphatique linéaire en C9 à C18, de préférence en C9, C10, C11 et C12, et où T est l'acide téréphtalique, préférentiellement en C10, C11 et C12.
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 20% en mole, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 20% en mole, de préférence 10% en mole, par rapport à la quantité totale des monomères utilisés dans le copolyamide, et
- à condition que des unités BACT et XT soient toujours présentes dans ledit copolyamide,
ladite couche étant dépourvue de fibres de renfort.

Il a donc été trouvé que ces produits, originellement développés pour des applications composites en raison de leur compromis haute rigidité (haute Tg), y compris à chaud, bonne processabilité (relativement basse Tf), présentaient également une structure cristalline supérieure aux attentes et pouvait être utilisée en tant que couche barrière, c'est-à-dire très peu perméable aux fluides, notamment automobiles, en particulier aux carburants, dans une structure, notamment multicouche, pour le transport de fluide, bien que le rapport fins de chaîne amine/fins de chaînes acide soit en particulier inférieur à 5.
La structure de l'invention peut être soit constituée d'une seule couche de ce polyamide soit comprendre une couche comprenant le polyamide BACT/XT et au moins une couche d'un autre matériau.

Dans la structure de l'invention la couche comprenant le polyamide BACT/XT peut comprendre aussi d'autres polymères. A titre d'exemple de ces autres polymères on peut citer les polyamides, l'EVOH, le PPS, le PPO, le polycarbonate, l'ABS.

L'invention concerne aussi l'utilisation d'un copolyamide BACT/XT de haute Tg pour la fabrication d'une structure, notamment multicouche, comprenant au moins une couche barrière comprenant ledit copolyamide BACT/XT.

L'invention concerne aussi des bouteilles, réservoirs, conteneurs, tuyaux et récipients de toute sorte fabriqués avec la structure précédente. Cette structure peut aussi se présenter sous forme de films avec lesquels on fait par exemple des emballages. Tous ces objets présentent de bonnes propriétés barrière.

L'invention concerne également ces objets ainsi que l'utilisation de ces structures et de ces objets.

### Description détaillée de l'invention

D'autres caractéristiques, aspects, objets et avantages de la présente invention apparaîtront encore plus clairement à la lecture de la description et des exemples qui suivent.

Selon un premier aspect de l'invention, l'invention porte sur une structure comprenant au moins une couche comprenant un copolyamide BACT/XT, dans lequel :
- BACT est une unité à motif amide présente à un taux molaire allant de 20 à 70%, de préférence de 25 à 60%, plus préférentiellement de 35 à 55%, où BAC est choisi parmi la 1,3-bis (aminométhyle) cyclohexyle (1,3 BAC), la 1,4-bis (aminométhyle) cyclohexyle (1,4 BAC) et un mélange de ceux-ci, et T est l'acide téréphtalique,
- XT est une unité à motif amide présente à un taux molaire allant de 30 à 80%, de préférence de 40 à 75%, plus préférentiellement de 45 à 65%, où X est une diamine aliphatique linéaire en C9 à C18, de préférence en C9, C10, C11 et C12, et où T est l'acide téréphtalique, préférentiellement en C10, C11 et C12.
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 10% en mole, par rapport à la quantité totale des monomères utilisés dans le copolyamide, et
- à condition que des unités BACT et XT soient toujours présentes dans ledit copolyamide,
ladite couche étant dépourvue de fibres de renfort.

Avantageusement, ledit copolyamide présente un rapport : quantité de groupes de fins de chaîne amine/quantité de groupes de fins de chaîne acide < 5, lesdites quantités de groupes de fins de chaîne amine et quantité de groupes de fins de chaîne acide étant déterminées par potentiométrie.

La 1,3-BAC (ou 1,3 bis(aminométhyl)cyclohexane, N° CAS : 2579-20-6) est un monomère diamine cycloaliphatique obtenu notamment par hydrogénation de la meta-xylène diamine (MXDA). La 1,3-BAC existe sous la forme de deux isomères, cis et trans, le N° CAS : 2579-20-6 correspondant à un mélange d'isomères.

La 1,4-BAC (ou 1,4 bis(aminométhyl)cyclohexane, N° CAS : 2549-07-9) est un monomère diamine cycloaliphatique obtenu notamment par hydrogénation de la para-xylène diamine (PXDA). La 1,4-BAC existe sous la forme de deux isomères, cis et trans, le N° CAS : 2549-07-9 correspondant à un mélange d'isomères.

Avantageusement, la 1,3 BAC ou la 1,4 BAC utilisée dans l'unité BACT est un mélange d'isomères cis et trans en proportion respective de 0/100 à 100/0, notamment de 75/25 à 25/75.

Avantageusement, la proportion d'isomère cis dans la 1,3 BAC est supérieure à 60%, préférentiellement supérieure à 70%, en particulier supérieure à 80%, notamment supérieure à 90%.

Avantageusement, la proportion d'isomère trans dans la 1,4 BAC est supérieure à 60%, préférentiellement supérieure à 70%, en particulier supérieure à 80%, notamment supérieure à 90%.

BAC et/ou X peuvent être remplacés, indépendamment l'une de l'autre, jusqu'à 30% en mole par d'autres diamines ci-dessus définies, notamment par une diamine aliphatique, linéaire ou branchée, une diamine cycloaliphatique ou une diamine arylaromatique telle que la meta-xylène diamine (MXDA).

A titre d'exemple, la diamine aliphatique linéaire ou branchée est choisie parmi la 1, 4-butanediamine, la 1,5-pentanediamine, la 2-methyl-1,5-pentanediamine (MPMD), la 1,6 hexanediamine, la 1,8-octanediamine (OMDA), la 1,9-nonanediamine (NMDA), la 2-méthyl-1,8-octane-diamine (MODA), la 2,2,4-triméthylhexamethylenediamine (TMHMD), la 2,4,4-triméthylhexamethylenediamine (TMHMD), la 5-méthyl-1,9-nonanediamine, 1,11-undécanediamine, la 2-butyl-2-éthyl-1,5-pentanediamine, la 1,12-dodécanediamine, la 1,13-tridécanediamine, la 1,14-tétradécanediamine, la 1,16-hexadécanediamine et la 1,18-octadécanediamine.

La diamine cycloaliphatique peut être choisie parmi l'isophoronediamine, la norbornanedimethylamine, la 4,4'-diaminodicyclohexylméthane (PACM), le 2,2-(4,4'-diamino-dicyclohexyl)propane (PACP), et le 3,3'-diméthyl-4,4'-diaminodicyclohexyléthane (MACM).

T peut être remplacé jusqu'à 30% en mole par d'autres diacides carboxyliques ci-dessus définies, notamment par d'autres diacides carboxyliques aromatiques, aliphatiques ou cycloaliphatiques.

Les diacides carboxyliques aromatiques peuvent être choisis parmi l'acide naphthalenedicarboxylique (NDA) et l'acide isophtalique (IPS).

Les diacides carboxyliques aliphatiques peuvent être choisis parmi l'acide adipique, l'acide subérique, l'acide azélaïque, l'acide sébacique, l'acide undécanedioïque, l'acide dodécanedioïque, l'acide brassylique, l'acide tétradecanedioïque, l'acide pentadécanedioïque, l'acide hexadécanedioiïque, l'acide octadécanedioïque et des acides gras dimérisés.

Les diacides carboxyliques cycloaliphatiques peuvent être choisis parmi l'acide cis- and/or trans-cyclohexane-1,4-dicarboxylique et/ou l'acide cis- et/ou trans-cyclohexane-1,3-dicarboxylique (CHDA).

BAC et/ou X et/ou T peuvent être remplacés, indépendamment l'un de l'autre, jusqu'à 30% en mole par des lactames ou des acides aminocarboxyliques.

Les lactames et acides aminocarboxyliques peuvent être choisi parmi le caprolactame (CL), l'acide α,ω-aminocaproïque, l'acide α,ω-aminononanoïque, l'acide α,ω-aminoundecanoïque (AUA), le lauryllactame (LL) et l'acide α,ω-aminododécanoïque (ADA).

30% en mole maximum, par rapport à la somme totale des monomère BAC, X et T, de remplacement que ce soit par une autre diamine, un autre diacide, un lactame ou un acide aminocarboxylique ou un mélange quelconque de ceux-ci est possible.

Avantageusement, 20% en mole maximum, par rapport à la somme totale des monomère BAC, X et T, de remplacement que ce soit par une autre diamine, un autre diacide, un lactame ou un acide aminocarboxylique ou un mélange quelconque de ceux-ci est possible.

Avantageusement, 10% en mole maximum, par rapport à la somme totale des monomère BAC, X et T, de remplacement que ce soit par une autre diamine, un autre diacide, un lactame ou un acide aminocarboxylique ou un mélange quelconque de ceux-ci est possible.

L'expression « fibres de renfort » ou « renfort fibreux » désigne un assemblage de fibres, courtes ou longues. Les fibres peuvent être continues, sous forme de renfort unidirectionnel (UD) ou multidirectionnel (2D, 3D), sous forme de tissus, de nappes, de bandes ou de tresses et peuvent également être coupées par exemple sous forme de non tissés (mats) ou sous forme de feutres.

L'expression « fibres de renfort » désigne :
- les fibres minérales, notamment les fibres de carbone, ce qui inclut les fibres de nanotubes ou nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine (Al2O3) ; les fibres métallisées comme les fibres de verre métallisées et les fibres de carbone métallisées ou les mélanges des fibres précitées.
- les fibres polymériques ou de polymère, notamment :
   - les fibres de polymères thermodurcissables et plus particulièrement choisies parmi : les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde
   - les fibres de polymères thermoplastiques et plus particulièrement choisies parmi : le polyéthylène téréphtalate (PET), le polybutylène téréphtalate (PBT),
   - les fibres de polyamides,
   - les fibres d'aramides (comme le Kevlar®) et polyamides aromatiques tels que ceux répondant à l'une des formules : PPDT, MPD.I, PAA et PPA, avec PPD et MPD étant respectivement la p- et m-phénylène diamine, PAA étant les polyarylamides et PPA étant les polyphtalamides
   - les fibres de copolymères blocs de polyamide tel que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).
      - ou les mélanges des fibres citées ci-haut.

Par conséquent, toutes les fibres de renfort et en particulier celles ci-dessus définies sont exclues de la portée l'invention.

Dans un mode de réalisation avantageux, la présente invention concerne une structure n° 1 à 3 définie ci-dessous comprenant au moins une couche (1) comprenant un copolyamide BACT/XT dans les proportions définies dans le tableau I ci-dessous:

**Tableau I**

| Structure N° | BACT % molaire | XT % molaire |
|---|---|---|
| 1 | 20-70 | 30-80 |
| 2 | 25-60 | 40-75 |
| 3 | 35-55 | 45-65 |

Avantageusement, dans les structures ci-dessus définies, X est une diamine en C9, C10, C11 et C12, en particulier en C10, C11 et C12.

Dans un mode de réalisation avantageux, la présente invention concerne une structure telle que définie ci-dessus, dans laquelle ledit copolyamide présente une température de fusion Tf < 290°C, de préférence < 285°C, plus préférentiellement < 280°C, telle que déterminée selon la norme ISO 11357-3 (2013).

Dans un mode de réalisation avantageux, la présente invention concerne une structure telle que définie ci-dessus, dans laquelle ledit copolyamide présente une température de transition vitreuse Tg > 120°C, de préférence > 130°C, plus préférentiellement > 140°C, déterminée selon la norme ISO 11357-2 :2013.

Avantageusement, la Tg est comprise de 125 à 165°C.

Dans un mode de réalisation avantageux, la présente invention concerne une structure telle que définie ci-dessus, dans laquelle ledit copolyamide présente un écart entre la température de fusion et la température de cristallisation Tf-Tc < 40°C, préférentiellement < 30°C, déterminé selon la norme ISO 11357-3 :2013.

Dans un mode de réalisation avantageux, la présente invention concerne une structure telle que définie ci-dessus, caractérisée en ce que l'enthalpie de cristallisation du copolyamide, mesurée en Calorimétrie Différentielle à Balayage (DSC) selon la Norme ISO 11357-3 :2013, est supérieure à 40 J/g, de préférence supérieure à 45 J/g, et encore plus préférentiellement 50J/g.

Dans un mode de réalisation avantageux, la présente invention concerne une structure telle que définie ci-dessus, caractérisée en ce que ledit copolyamide présente une température de fusion : Tf < 290°C et une Tg >120°C.

Dans un mode de réalisation avantageux, la présente invention concerne une structure telle que définie ci-dessus, caractérisée en ce que ledit copolyamide présente une température de fusion : Tf < 290°C et une Tg >130°C.

Dans un mode de réalisation avantageux, la présente invention concerne une structure telle que définie ci-dessus, caractérisée en ce que ledit copolyamide présente une température de fusion : Tf < 290°C et une Tg >140°C.

Dans un mode de réalisation avantageux, la présente invention concerne une structure telle que définie ci-dessus, caractérisée en ce que ledit copolyamide présente une température de fusion : Tf < 285°C et une Tg >120°C.

Dans un mode de réalisation avantageux, la présente invention concerne une structure telle que définie ci-dessus, caractérisée en ce que ledit copolyamide présente une température de fusion : Tf < 285°C et une Tg >130°C.

Dans un mode de réalisation avantageux, la présente invention concerne une structure telle que définie ci-dessus, caractérisée en ce que ledit copolyamide présente une température de fusion : Tf < 285°C et une Tg >140°C.

Dans un mode de réalisation avantageux, la présente invention concerne une structure telle que définie ci-dessus, caractérisée en ce que ledit copolyamide présente une température de fusion : Tf < 280°C et une Tg >120°C.

Dans un mode de réalisation avantageux, la présente invention concerne une structure telle que définie ci-dessus, caractérisée en ce que ledit copolyamide présente une température de fusion : Tf < 280°C et une Tg >130°C.

Dans un mode de réalisation avantageux, la présente invention concerne une structure telle que définie ci-dessus, caractérisée en ce que ledit copolyamide présente une température de fusion : Tf < 280°C et une Tg >140°C.

Dans un mode de réalisation avantageux, la présente invention concerne une structure telle que définie ci-dessus, caractérisée en ce que ledit copolyamide présente les caractéristiques suivantes (tableau II) :

**TABLEAU II**

| structure N° | Structures initiales | Tf (°C) | Tg (°C) | Tf-Tc (°C) | Delta Hc (J/g) |
|---|---|---|---|---|---|
| 4 | Structures 1 à 3 | <290 | >120°C | | |
| 5 | Structures 1 à 3 | <290 | >130°C | | |
| 6 | Structures 1 à 3 | <290 | >140°C | | |
| 7 | Structures 1 à 3 | <285 | >120°C | | |
| 8 | Structures 1 à 3 | <285 | >130°C | | |
| 9 | Structures 1 à 3 | <285 | >140°C | | |
| 10 | Structures 1 à 3 | <280 | >120°C | | |
| 11 | Structures 1 à 3 | <280 | >130°C | | |
| 12 | Structures 1 à 3 | <280 | >140°C | | |
| 13 | Structures 1 à 3 | <290 | >120°C | <40 | |
| 14 | Structures 1 à 3 | <290 | >130°C | <40 | |
| 15 | Structures 1 à 3 | <290 | >140°C | <40 | |
| 16 | Structures 1 à 3 | <285 | >120°C | <40 | |
| 17 | Structures 1 à 3 | <285 | >130°C | <40 | |
| 18 | Structures 1 à 3 | <285 | >140°C | <40 | |
| 19 | Structures 1 à 3 | <280 | >120°C | <40 | |
| 20 | Structures 1 à 3 | <280 | >130°C | <40 | |
| 21 | Structures 1 à 3 | <280 | >140°C | <40 | |
| 22 | Structures 1 à 3 | <290 | >120°C | <30 | |
| 23 | Structures 1 à 3 | <290 | >130°C | <30 | |
| 24 | Structures 1 à 3 | <290 | >140°C | <30 | |
| 25 | Structures 1 à 3 | <285 | >120°C | <30 | |
| 26 | Structures 1 à 3 | <285 | >130°C | <30 | |
| 27 | Structures 1 à 3 | <285 | >140°C | <30 | |
| 28 | Structures 1 à 3 | <280 | >120°C | <30 | |
| 29 | Structures 1 à 3 | <280 | >130°C | <30 | |
| 30 | Structures 1 à 3 | <280 | >140°C | <30 | |
| 31 | Structures 1 à 3 | <290 | >120°C | <40 | >40 |
| 32 | Structures 1 à 3 | <290 | >130°C | <40 | >40 |
| 33 | Structures 1 à 3 | <290 | >140°C | <40 | >40 |
| 34 | Structures 1 à 3 | <285 | >120°C | <40 | >40 |
| 35 | Structures 1 à 3 | <285 | >130°C | <40 | >40 |
| 36 | Structures 1 à 3 | <285 | >140°C | <40 | >40 |
| 37 | Structures 1 à 3 | <280 | >120°C | <40 | >40 |
| 38 | Structures 1 à 3 | <280 | >130°C | <40 | >40 |
| 39 | Structures 1 à 3 | <280 | >140°C | <40 | >40 |
| 40 | Structures 1 à 3 | <290 | >120°C | <30 | >40 |
| 41 | Structures 1 à 3 | <290 | >130°C | <30 | >40 |
| 42 | Structures 1 à 3 | <290 | >140°C | <30 | >40 |
| 43 | Structures 1 à 3 | <285 | >120°C | <30 | >40 |
| 44 | Structures 1 à 3 | <285 | >130°C | <30 | >40 |
| 45 | Structures 1 à 3 | <285 | >140°C | <30 | >40 |
| 46 | Structures 1 à 3 | <280 | >120°C | <30 | >40 |
| 47 | Structures 1 à 3 | <280 | >130°C | <30 | >40 |
| 48 | Structures 1 à 3 | <280 | >140°C | <30 | >40 |
| 49 | Structures 1 à 3 | <290 | >120°C | <40 | >45 |
| 50 | Structures 1 à 3 | <290 | >130°C | <40 | >45 |
| 51 | Structures 1 à 3 | <290 | >140°C | <40 | >45 |
| 52 | Structures 1 à 3 | <285 | >120°C | <40 | >45 |
| 53 | Structures 1 à 3 | <285 | >130°C | <40 | >45 |
| 54 | Structures 1 à 3 | <285 | >140°C | <40 | >45 |
| 55 | Structures 1 à 3 | <280 | >120°C | <40 | >45 |
| 56 | Structures 1 à 3 | <280 | >130°C | <40 | >45 |
| 57 | Structures 1 à 3 | <280 | >140°C | <40 | >45 |
| 58 | Structures 1 à 3 | <290 | >120°C | <30 | >45 |
| 59 | Structures 1 à 3 | <290 | >130°C | <30 | >45 |
| 60 | Structures 1 à 3 | <290 | >140°C | <30 | >45 |
| 61 | Structures 1 à 3 | <285 | >120°C | <30 | >45 |
| 62 | Structures 1 à 3 | <285 | >130°C | <30 | >45 |
| 63 | Structures 1 à 3 | <285 | >140°C | <30 | >45 |
| 64 | Structures 1 à 3 | <280 | >120°C | <30 | >45 |
| 65 | Structures 1 à 3 | <280 | >130°C | <30 | >45 |
| 66 | Structures 1 à 3 | <280 | >140°C | <30 | >45 |
| 67 | Structures 1 à 3 | <290 | >120°C | <40 | >50 |
| 68 | Structures 1 à 3 | <290 | >130°C | <40 | >50 |
| 69 | Structures 1 à 3 | <290 | >140°C | <40 | >50 |
| 70 | Structures 1 à 3 | <285 | >120°C | <40 | >50 |
| 71 | Structures 1 à 3 | <285 | >130°C | <40 | >50 |
| 72 | Structures 1 à 3 | <285 | >140°C | <40 | >50 |
| 73 | Structures 1 à 3 | <280 | >120°C | <40 | >50 |
| 74 | Structures 1 à 3 | <280 | >130°C | <40 | >50 |
| 75 | Structures 1 à 3 | <280 | >140°C | <40 | >50 |
| 76 | Structures 1 à 3 | <290 | >120°C | <30 | >50 |
| 77 | Structures 1 à 3 | <290 | >130°C | <30 | >50 |
| 78 | Structures 1 à 3 | <290 | >140°C | <30 | >50 |
| 79 | Structures 1 à 3 | <285 | >120°C | <30 | >50 |
| 80 | Structures 1 à 3 | <285 | >130°C | <30 | >50 |
| 81 | Structures 1 à 3 | <285 | >140°C | <30 | >50 |
| 82 | Structures 1 à 3 | <280 | >120°C | <30 | >50 |
| 83 | Structures 1 à 3 | <280 | >130°C | <30 | >50 |
| 84 | Structures 1 à 3 | <280 | >140°C | <30 | >50 |

Dans un mode de réalisation avantageux, la présente invention concerne une structure telle que définie ci-dessus, caractérisée en ce que la BAC est la 1,3 BAC.

Avantageusement, la 1,3 BAC est un mélange d'isomères cis et trans en proportion respective de 0/100 à 100/0, notamment de 75/25 à 25/75.

Avantageusement, la proportion d'isomère cis dans la 1,3 BAC est supérieure à 60%, préférentiellement supérieure à 70%, en particulier supérieure à 80%, notamment supérieure à 90%.

Dans un mode de réalisation avantageux, la présente invention concerne une structure telle que définie ci-dessus, dans laquelle la BAC est la 1,3 BAC et XT est choisi parmi 9T, 10T, 11T et 12T, plus préférentiellement 10T, 11T et 12T.

Avantageusement, XT est 10T, 10 correspondant à la 1,10 décanediamine.

Dans un mode de réalisation avantageux, la présente invention concerne une structure telle que définie ci-dessus, dans laquelle la somme des monomères qui remplacent l'acide téréphtalique, la BAC et X est égale à 0. Dans ce dernier mode de réalisation, il n'y a donc plus de substitution possible des monomères dans les structures 1 à 84 telles que ci-dessus définies.

Dans un mode de réalisation avantageux, la présente invention concerne une structure telle que définie ci-dessus, dans laquelle ladite couche (1) comprend un modifiant choc et/ou un modifiant de type core-shell.

Par l'expression « modifiant choc », il faut entendre un polymère à base polyoléfine présentant un module de flexion inférieur à 100 MPa mesuré selon la norme ISO 178 :2010 et de Tg inférieure à 0°C (mesurée selon la norme 11357-2 :2013 au niveau du point d'inflexion du thermogramme DSC), en particulier une polyoléfine, couplée ou non avec un PEBA (polyéther-bloc-amide) ayant un module de flexion < 200 MPa.

Dans ce mode de réalisation avantageux, ce polymère à base de polyoléfine est donc présent dans le copolyamide constituant la couche (1).

La polyoléfine du modifiant choc peut être fonctionnalisée ou non fonctionnalisée ou être un mélange d'au moins une fonctionnalisée et/ou d'au moins une non fonctionnalisée.

Notamment, une partie ou la totalité des polyoléfines porte une fonction choisie parmi les fonctions acide carboxylique, anhydride carboxylique et époxyde, et est en particulier choisie parmi un copolymère d'éthylène et de propylène à caractère élastomère (EPR), un copolymère éthylène-propylène-diène à caractère élastomère (EPDM) et un copolymère éthylène/(meth)acrylate d'alkyle, un copolymère éthylène-alcène supérieur, en particulier un copolymère étylène-octène, un terpolymère éthylène-acrylate d'alkyle-anhydride maléique.

Avantageusement, le modifiant choc est choisi parmi le Fusabond F493, un Lotader®, en particulier le Lotader 5500 ou le Lotader 7500, l'Escor VA1801 ou VA1803, l'Excelsior E1040, l'Amplify GR216, le Tafmer MH5020 ou l'Orevac IM800, ou un mélange de ceux-ci, dans ce cas ils sont dans un rapport allant de 0,1/99,9 à 99,9/0,1, préférentiellement 1/2 à 2/1 lorsqu'ils sont en mélange de deux.

A titre d'exemple, le modifiant choc est choisi parmi les mélanges suivants : F493/Lotader®, en particulier F493/Lotader® 5500 ou F493/Lotader® 7500.

L'expression « modifiant de type core-shell » est également désignée « modifiant de type cœur-écorce » ou « copolymère de type cœur-écorce ».

Le « modifiant de type core-shell » se présente sous la forme de fines particules ayant un cœur en élastomère et au moins une écorce thermoplastique, la taille des particules est en général inférieure au µm et avantageusement comprise entre 150 et 500 nm.

Le « modifiant de type core-shell » possède une base acrylique ou butadiène contrairement au modifiant choc qui possède une base polyoléfine.

A titre d'exemple de cœur on peut citer les homopolymères de l'isoprène ou du butadiène, les copolymères de l'isoprène avec au plus 30% en moles d'un monomère vinylique et les copolymères du butadiène avec au plus 30% en moles d'un monomère vinylique. Le monomère vinylique peut être le styrène, un alkylstyrène, l'acrylonitrile ou un (meth)acrylate d'alkyle. Une autre famille de cœur est constituée par les homopolymères d'un (meth)acrylate d'alkyle et les copolymères d'un (meth)acrylate d'alkyle avec au plus 30% en moles d'un monomère vinylique. Le (meth)acrylate d'alkyle est avantageusement l'acrylate de butyle. Le monomère vinylique peut être le styrène, un alkylstyrène, l'acrylonitrile, le butadiène ou l'isoprène. Le cœur du copolymère (A) peut être réticulé en tout ou partie. Il suffit d'ajouter des monomères au moins difonctionnels au cours de la préparation du cœur, ces monomères peuvent être choisis parmi les esters poly(meth)acryliques de polyols tels que le di(meth)acrylate de butylène et le trimethylol propane trimethacrylate. D'autres monomères difonctionnels sont par exemple le divinylbenzène, le trivinylbenzène, l'acrylate de vinyle et le methacrylate de vinyle. On peut aussi réticuler le cœur en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maléique, l'acide (meth)acrylique et le méthacrylate de glycidyle.

L'écorce ou les écorces sont des homopolymères du styrène, d'un alkylstyrène ou du méthacrylate de méthyle ou des copolymères comprenant au moins 70% en moles de l'un de ces monomères précédents et au moins un comonomère choisi parmi les autres monomères précédents, l'acétate de vinyle et l'acrylonitrile. L'écorce peut être fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maléique, l'acide (meth)acrylique et le méthacrylate de glycidyle. A titre d'exemple on peut citer des copolymères cœur - écorce (A) ayant une écorce en polystyrène et des copolymères cœur - écorce (A) ayant une écorce en PMMA. Il existe aussi des copolymères cœur - écorce (A) ayant deux écorces, l'une en polystyrène et l'autre à l'extérieur en PMMA. Des exemples de copolymère (A) ainsi que leur procédé de préparation sont décrits dans les brevets suivants : US 4 180 494, US 3 808 180, US 4096 202, US 4 260 693, US 3 287 443, US 3 657 391, US 4 299 928, US 3 985 704.

Le « modifiant de type core-shell est donc différent de la polyoléfine du modifiant choc et notamment par ce que le modifiant choc réagit avec la matrice de polyamide alors que le core-shell ne réagit pas avec celle-ci car le cœur de ce dernier n'est susceptible de réagir qu'avec l'écorce de celui-ci.

Avantageusement, le modifiant choc et/ou le modifiant de type core-shell est présent de 5 à 35% en poids par rapport au poids de tous les constituants du copolyamide de la couche (1), en particulier de 5 à 25%, et plus particulièrement de 5 à 15%.

Avantageusement, l'invention porte donc sur une structure telle que définie ci-dessus comprenant au moins une couche (1) comprenant un copolyamide BACT/XT tel que défini ci-dessus et comprenant un modifiant choc et/ou un modifiant de type core-shell en proportion de 5 à 35% en poids par rapport au poids de tous les constituants du copolyamide, en particulier de 5 à 25%, et plus particulièrement de 5 à 15%.

Avantageusement, dans les structures comprenant un modifiant choc et/ou un modifiant de type core-shell, X est la 1,10-décanediamine.

Dans un mode de réalisation avantageux, la présente invention concerne une structure telle que définie ci-dessus, dans laquelle ladite structure est constituée d'une seule couche (1).

L'invention concerne donc ici un tuyau monocouche et dans ce mode de réalisation, aucune autre couche n'est présente.

Dans un mode de réalisation avantageux, la présente invention concerne une structure telle que définie ci-dessus, dans laquelle ladite couche (1) comprend un stabilisant choisi parmi un stabilisant organique, un stabilisant minéral, en particulier un stabilisant à base de cuivre, et un mélange de ceux-ci.

L'expression « stabilisant organique » ou plus généralement une « combinaison de stabilisants organiques », désigne un antioxydant primaire de type phénol, un antioxydant secondaire de type phosphite et voire éventuellement d'autres stabilisants comme un HALS, ce qui signifie Hindered Amine Light Stabiliser ou stabilisant lumière de type amine encombrée (par exemple le Tinuvin® 770 de la société Ciba), un anti-UV (par exemple le Tinuvin® 312 de la société Ciba), un stabilisant phénolique ou à base de phosphore. On peut également utiliser des antioxydants de type amine tel le Naugard® 445 de la société Crompton ou encore des stabilisants polyfonctionnels tel le Nylostab® S-EED de la société Clariant.

Le stabilisant organique présent au sein de la couche (1) peut être choisi, sans que cette liste soit restrictive, parmi :
- les anti-oxydants phénoliques, par exemple l'Irganox® 245, l'Irganox® 1010, l'Irganox® 1098 de la société Ciba, l'Irganox® MD1024 de la société Ciba, le Lowinox® 44B25 de la société Great Lakes, l'ADK® Stab AO-80 de la société Adeka Palmarole.
- les stabilisants à base de phosphore, comme les phosphites, par exemple l'Irgafos® 168 de la société Ciba,
- un absorbeur UV, tel le Tinuvin® 312 de la société Ciba,
- un HALS, comme précédemment mentionné,
- un stabilisant de type amine, tel le Naugard® 445 de la société Crompton, ou encore de type amine encombrée tel le Tinuvin® 770 de la société Ciba,
- un stabilisant polyfonctionnel tel le Nylostab® S-EED de la société Clariant.

On peut bien évidemment envisager un mélange de deux, ou plus, de ces stabilisants organiques.

De préférence, le stabilisant organique est présent au sein du copolyamide de la couche (1) de la structure en une teneur comprise entre 0,3 et 3% en poids par rapport au poids total des constituants du copolyamide.

L'expression « stabilisant minéral » désigne un stabilisant à base de cuivre. A titre d'exemple de tels stabilisants minéraux, on peut citer les halogénures et les acétates de cuivre. Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

Ces stabilisants minéraux sont plus particulièrement employés, lorsque les structures doivent avoir une résistance thermique améliorée à long terme dans l'air chaud, notamment pour des températures supérieures ou égales à 100-120°C, car ils tendent à empêcher les coupures de chaînes polymériques.

Plus particulièrement, par stabilisant à base de cuivre, on entend un composé comprenant au moins un atome de cuivre, notamment sous forme ionique, ionisable, par exemple sous forme de complexe.

Le stabilisant à base de cuivre présent au sein de la couche (1) peut être choisi parmi le chlorure cuivreux, le chlorure cuivrique, le bromure cuivreux, le bromure cuivrique, l'iodure cuivreux, l'iodure cuivrique, l'acétate cuivreux et l'acétate cuivrique. On peut citer les halogénures, les acétates d'autres métaux tels l'argent en association avec le stabilisant à base de cuivre. Ces composés à base de cuivre sont typiquement associés à des halogénures de métaux alcalins. Un exemple bien connu est le mélange de CuI et KI, où le ratio CuI:KI est typiquement compris entre 1:5 à 1:15. Un exemple d'un tel stabilisant est le Polyadd P201 de la société Ciba.

On trouvera de plus amples détails sur les stabilisants à base de cuivre dans le brevet US 2,705,227. Plus récemment, sont apparus des stabilisants à base de cuivre tel les cuivres complexés comme les Bruggolen H3336, H3337, H3373 de la société Brüggemann.

Avantageusement, le stabilisant à base de cuivre est choisi parmi les halogénures de cuivre, l'acétate de cuivre, les halogénures de cuivre ou l'acétate de cuivre en mélange avec au moins un halogénure de métal alcalin, et leurs mélanges, de préférence les mélanges d'iodure de cuivre et d'iodure de potassium (CuI/KI).

De préférence, le stabilisant à base de cuivre est présent dans la couche (1) de la structure en une teneur comprise entre 0,05 et 1,5% en poids par rapport au poids total des constituants du copolyamide.

De préférence, la couche (1) ne comprend en outre aucun autre métal de transition.

Avantageusement, l'invention porte donc sur une structure telle que définie ci-dessus comprenant au moins une couche (1) comprenant un copolyamide BACT/XT tel que défini ci-dessus et comprenant un modifiant choc et/ou un modifiant de type core-shell en proportion de 5 à 35% en poids par rapport au poids de tous les constituants du copolyamide et un stabilisant organique.

Avantageusement, l'invention porte donc sur une structure telle que définie ci-dessus comprenant au moins une couche (1) comprenant un copolyamide BACT/XT tel que défini ci-dessus et comprenant un modifiant choc et/ou un modifiant de type core-shell en proportion de 5 à 35% en poids par rapport au poids de tous les constituants du copolyamide et un stabilisant minéral, en particulier un stabilisant à base de cuivre.

Avantageusement, l'invention porte donc sur une structure telle que définie ci-dessus comprenant au moins une couche (1) comprenant un copolyamide BACT/XT tel que défini ci-dessus et comprenant un modifiant choc et/ou un modifiant de type core-shell en proportion de 5 à 35% en poids par rapport au poids de tous les constituants du copolyamide et un mélange de stabilisant organique et de stabilisant minéral, en particulier un stabilisant à base de cuivre.

Avantageusement, l'invention porte donc sur une structure telle que définie ci-dessus comprenant au moins une couche (1) comprenant un copolyamide BACT/XT tel que défini ci-dessus et comprenant un modifiant choc et/ou un modifiant de type core-shell en proportion de 5 à 25% en poids par rapport au poids de tous les constituants du copolyamide et un stabilisant organique.

Avantageusement, l'invention porte donc sur une structure telle que définie ci-dessus comprenant au moins une couche (1) comprenant un copolyamide BACT/XT tel que défini ci-dessus et comprenant un modifiant choc et/ou un modifiant de type core-shell en proportion de 5 à 25% en poids par rapport au poids de tous les constituants du copolyamide et un stabilisant minéral, en particulier un stabilisant à base de cuivre.

Avantageusement, l'invention porte donc sur une structure telle que définie ci-dessus comprenant au moins une couche (1) comprenant un copolyamide BACT/XT tel que défini ci-dessus et comprenant un modifiant choc et/ou un modifiant de type core-shell en proportion de 5 à 25% en poids par rapport au poids de tous les constituants du copolyamide et un mélange de stabilisant organique et de stabilisant minéral, en particulier un stabilisant à base de cuivre.

Avantageusement, dans les structures comprenant un modifiant choc et/ou un modifiant de type core-shell, et un stabilisant X est la 1,10-décanediamine.

Dans un mode de réalisation avantageux, la présente invention concerne une structure telle que définie ci-dessus, dans laquelle ladite couche (1) comprend une charge antistatique, en particulier choisie parmi le noir de carbone, et le graphite, en particulier le noir de carbone.

Dans un mode de réalisation avantageux, la présente invention concerne une structure telle que définie ci-dessus, dans laquelle ladite couche (1) comprend au moins un additif choisi parmi un antioxydant, un stabilisant à la chaleur, un absorbeur d'UV, un stabilisant à la lumière, un lubrifiant, une charge inorganique, un agent ignifugeant, un agent nucléant, un plastifiant et un colorant.

Les fibres de renfort sont exclues des additifs et en particulier le terme « charge inorganique » exclut les fibres de renfort.

Avantageusement, le ou les additifs sont présent dans la couche (1) en proportion en poids de 1 à 20%, en particulier de 5 à 15%, par rapport au poids total des constituants de la couche (1).

Dans un mode de réalisation avantageux, la présente invention concerne une structure telle que définie ci-dessus, dans laquelle une seconde couche (2) est présente, les couches (1) et (2) étant susceptibles d'adhérer l'une à l'autre.

L'expression « étant susceptibles d'adhérer l'une à l'autre » signifie que si la structure est constituée de deux couches, les couches (1) et (2) adhère l'une à l'autre, au moins partiellement.

Si la structure comprend au moins une troisième couche, ladite troisième couche peut être placée entre la couche (1) et la couche (2), auquel cas les couches (1) et (2) n'adhèrent pas entre elles mais par contre les couches (1) et (3) adhèrent entre elles ainsi que les couches (3) et (2).

Avantageusement, la structure est constituée de deux couches (1) et (2) adhérant entre elles.

Avantageusement, ladite couche (2) comprend au moins un polyamide choisi parmi un polyamide aliphatique et un polyamide aromatique, en particulier un polyamide aliphatique.

Avantageusement, ledit polyamide aliphatique est issu de la polycondensation d'au moins un lactame ou d'au moins un acide aminocarboxylique, ou d'une diamine et d'un diacide carboxylique ou d'un mélange de ceux-ci, la diamine étant choisi parmi une diamine aliphatique, une diamine cycloaliphatique et le diacide carboxylique étant choisi parmi un diacide aliphatique et un diacide cycloaliphatique, ou un mélange de ceux-ci.

L'acide aminocarboxylique peut être choisi parmi l'acide 9-aminononanoïque, l'acide 10-aminodécanoïque, l'acide 12-aminododécanoïque et l'acide 11- aminoundécanoïque ainsi que ses dérivés, notamment l'acide N-heptyl-11-aminoundécanoïque, avantageusement l'acide 12-aminododécanoïque et l'acide 11- aminoundécanoïque.

Le lactame peut être choisi parmi la pyrrolidinone, la piperidinone, le caprolactame, l'énantholactame, le caprylolactame, le pelargolactame, le décanolactame, l'undécanolactame, et le laurolactame, avantageusement l'undécanolactame, et le laurolactame.

Lorsque la diamine est aliphatique et linéaire, elle est de formule H2N-(CH2)a-NH2. Le diacide peut être aliphatique (notamment aliphatique linéaire), cycloaliphatique ou aromatique.

Préférentiellement, lorsque la diamine en est linéaire et aliphatique, elle est choisie parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tétradécanediamine (a=14), l'hexadécanediamine (a=16), l'octadécanediamine (a=18), l'octadécanediamine (a=18), l'eicosanediamine (a=20), la docosanediamine (a=22) et les diamines obtenues à partir d'acides gras dimérisés.

Lorsque la diamine est cycloaliphatique, elle est choisie de préférence parmi celles comprenant deux cycles. Elles répondent notamment à la formule générale suivante :
dans laquelle :
- R1, R2, R3 et R4 représentent indépendamment un groupe choisi parmi un atome d'hydrogène ou un alkyle de 1 à 6 atomes de carbone et
- X représente soit une liaison simple, soit un groupement divalent constitué:
- d'une chaîne aliphatique linéaire ou ramifiée comprenant de 1 à 10 atomes de carbone, éventuellement substituée par des groupements cycloaliphatiques ou aromatiques de 6 à 8 atomes de carbone,
- d'un groupement cycloaliphatique de 6 à 12 atomes de carbone.

Plus préférentiellement, la diamine cycloaliphatique Ca du polyamide est choisie parmi la bis(3,5-dialkyl-4-aminocyclohexyl)méthane, la bis(3,5-dialkyl-4-aminocyclohexyl) éthane, la bis(3,5-dialkyl-4-aminocyclo-hexyl)propane, la bis(3,5- dialkyl-4-amino cyclo-hexyl)butane, la bis-(3-méthyl-4-amino cyclohexyl)-méthane (noté BMACM, MACM ou B), la p- bis(aminocyclohexyl)-methane (PACM) et l'isopropylidenedi(cyclohexylamine) (PACP).

Une liste non-exhaustive de ces diamines cycloaliphatiques est donnée dans la publication "Cycloaliphatic Aminés" (Encyclopaedia of Chemical Technology, Kirk-Othmer, 4th Edition (1992), pp. 386-405).

Le diacide carboxylique aliphatique et linéaire est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanoïque (b=18), l'acide octadécènedioïque (b=18), l'acide eicosanedioïque (b=20), l'acide docosanedioïque (b=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornylméthane, cyclohexylméthane, dicyclohexylméthane, dicyclohexylpropane, di(méthylcyclohexyl) propane.

Le polyamide de la couche (2) peut être un homopolyamide ou un copolyamide.

La nomenclature utilisée pour définir les polyamides est décrite dans la norme ISO 16396-1 : 2015 « Plastiques -- Matériaux polyamides (PA) pour moulage et extrusion -- Partie 1: Système de désignation, marquage des produits et base de spécification ».

Avantageusement, le polyamide de la couche (2) est choisi parmi le PA11, le PA12, le PA1010, le PA1012, le PA610 et le PA612.

Dans un mode de réalisation avantageux, la présente invention concerne une structure telle que définie ci-dessus, dans laquelle un autre polyamide, différent de celui de la couche (2) peut être présent dans la couche (2).

En d'autres termes, un polyamide additionnel différent du polyamide de la couche (2) défini ci-dessus, est présent dans la couche (2).

Le terme « différent » signifie que lorsque le polyamide de la couche (2) est choisi parmi un polyamide aliphatique et un polyamide aromatique, en particulier un polyamide aliphatique, le polyamide additionnel également être un polyamide aliphatique ou un polyamide aromatique à condition qu'il ne soit pas celui utilisé pour la couche (2).

Ledit autre polyamide est tel que défini ci-dessus dans la couche (2) à condition qu'il soit différent de celui de la couche (2).

Avantageusement, un plastifiant est présent dans la couche (2).

Avantageusement, le plastifiant de la couche (2) est présent de 1 à 20%, en particulier de 5 à 15% en poids par rapport au poids de tous les constituants du copolyamide de la couche (2).

Dans un mode de réalisation avantageux, la présente invention concerne une structure telle que définie ci-dessus, dans laquelle un modifiant choc et/ou un modifiant de type core-shell est présent dans la couche (2).

Le modifiant choc et/ou le modifiant de type core-shell sont tels que définis ci-dessus.

Avantageusement, le modifiant choc et/ou le modifiant de type core-shell est présent de 5 à 35% en poids par rapport au poids de tous les constituants du copolyamide de la couche (2), en particulier de 5 à 25%, et plus particulièrement de 5 à 15%.

Dans un mode de réalisation avantageux, la présente invention concerne une structure telle que définie ci-dessus, dans laquelle une seconde couche (2) est présente, les couches (1) et (2) adhérant l'une à l'autre, la couche (1) étant l'une de celles ci-dessus définies, et la couche (2) comprenant un autre polyamide ou non, la couche (2) comprenant un plastifiant de 1 à 20% en poids et un modifiant choc et/ou un modifiant de type core-shell en proportion de 5 à 35% en poids par rapport au poids de tous les constituants du copolyamide de la couche (2).

Dans un mode de réalisation avantageux, la présente invention concerne une structure telle que définie ci-dessus, dans laquelle une seconde couche (2) est présente, les couches (1) et (2) adhérant l'une à l'autre, la couche (1) étant l'une de celles ci-dessus définies, et la couche (2) comprenant un autre polyamide ou non, la couche (2) comprenant un plastifiant de 1 à 20% en poids et un modifiant choc et/ou un modifiant de type core-shell en proportion de 5 à 25% en poids par rapport au poids de tous les constituants du copolyamide de la couche (2).

Dans un mode de réalisation avantageux, la présente invention concerne une structure telle que définie ci-dessus, dans laquelle une seconde couche (2) est présente, les couches (1) et (2) adhérant l'une à l'autre, la couche (1) étant l'une de celles ci-dessus définies, et la couche (2) comprenant un autre polyamide ou non, la couche (2) comprenant un plastifiant de 5 à 15% en poids et un modifiant choc et/ou un modifiant de type core-shell en proportion de 5 à 35% en poids par rapport au poids de tous les constituants du copolyamide de la couche (2).

Dans un mode de réalisation avantageux, la présente invention concerne une structure telle que définie ci-dessus, dans laquelle une seconde couche (2) est présente, les couches (1) et (2) adhérant l'une à l'autre, la couche (1) étant l'une de celles ci-dessus définies, et la couche (2) comprenant un autre polyamide ou non, la couche (2) comprenant un plastifiant de 5 à 15% en poids et un modifiant choc et/ou un modifiant de type core-shell en proportion de 5 à 25% en poids par rapport au poids de tous les constituants du copolyamide de la couche (2).

Dans un mode de réalisation avantageux, la présente invention concerne une structure telle que définie ci-dessus, dans laquelle une seconde couche (2) est présente, dans laquelle ladite couche (2) comprend un stabilisant choisi parmi un stabilisant organique, un stabilisant minéral, en particulier un stabilisant à base de cuivre, et un mélange de ceux-ci.

Les stabilisants sont tels que définis ci-dessus.

Dans un mode de réalisation avantageux, la présente invention concerne une structure telle que définie ci-dessus, dans laquelle une seconde couche (2) est présente, dans laquelle la couche (1) comprend un stabilisant organique et la couche (2) comprend un stabilisant minéral, en particulier un stabilisant à base de cuivre.

Dans un mode de réalisation avantageux, la présente invention concerne une structure telle que définie ci-dessus, dans laquelle une seconde couche (2) est présente, dans laquelle la couche (1) comprend un stabilisant minéral, en particulier un stabilisant à base de cuivre et la couche (2) comprend un stabilisant organique.

Dans un mode de réalisation avantageux, la présente invention concerne une structure telle que définie ci-dessus, dans laquelle une seconde couche (2) est présente, dans laquelle ladite couche (2) comprend une charge antistatique choisie parmi le noir de carbone et le graphite, en particulier le noir de carbone.

Dans un mode de réalisation avantageux, la présente invention concerne une structure telle que définie ci-dessus, dans laquelle une seconde couche (2) est présente, dans laquelle ladite couche (2) comprend au moins un additif choisi parmi un antioxydant, un stabilisant à la chaleur, un absorbeur d'UV, un stabilisant à la lumière, un lubrifiant, une charge inorganique, un agent ignifugeant, un agent nucléant et un colorant.

Dans un mode de réalisation avantageux, la présente invention concerne une structure telle que définie ci-dessus, dans laquelle la couche (1) est une couche barrière, notamment à un fluide, ledit fluide étant choisi parmi un carburant, ledit carburant étant une essence, en particulier une bio essence (mélange d'essence et d'alcool, notamment de méthanol ou d'éthanol), ou du diesel en particulier le bio-diesel, une huile, un liquide de frein, des solutions d'urée, un liquide de refroidissement à base de glycol, un gaz, en particulier de l'air comprimé, ladite couche barrière (1) est en contact avec le fluide.

La structure définie dans ce mode de réalisation comprend donc au moins une couche (1) et peut donc être monocouche ou bicouche (1) et (2) mais on ne sortirait pas du cadre de l'invention si la structure comprenait d'autres couches.

Avantageusement, la structure est constituée de deux couches (1) et (2) et la couche (1) est la couche barrière.

Par conséquent, dans le cas où la structure comprend deux couches, elle comprend de l'extérieur vers l'intérieur les couches suivantes : (2)//(1).

Dans le cas où la structure comprend au moins une autre couche, cette dernière ne peut être en contact avec le fluide.

Dans un mode de réalisation avantageux, la présente invention concerne une structure comprenant au moins une couche (1) telle que définie ci-dessus, et une seconde couche (2) telle que définie ci-dessus, les couches (1) et (2) étant susceptibles d'adhérer l'une à l'autre, comprenant de plus une couche (3), la couche (3) étant identique à ou différente de la couche (1).

Dans ce mode de réalisation, la structure comprend ou est constituée des couches suivantes, de l'extérieur vers l'intérieur :
(3)//(2)//(1) ou (2)//(3)//(1).

Avantageusement, la couche (3) est différente de la couche (1) et est une couche de liaison et la structure comprend de l'extérieur vers l'intérieur les couches suivantes: (2)//(3)//(1), la couche (1) étant en contact avec le fluide.

Avantageusement, dans la structure (2)//(3)//(1), la couche (1) a une épaisseur de 100 à 300|jm, notamment de 200 à 300|jm, en particulier 250µm, la couche (3) a une épaisseur de 50 à 100µm ou de 100 à 200µm, en particulier 150µm et la couche (2) a une épaisseur de 50 à 800µm, notamment de 50 à 200µm ou de 500 à 700µm.

La couche de liaison peut être un mélange d'au moins un polyamide présentant un nombre moyen d'atomes de carbone par atome d'azote noté compris entre 4 et 8,5, avantageusement entre 4 et 7 ; au moins un polyamide présentant une température de fusion supérieure ou égale à 180°C et un nombre moyen d'atomes de carbone par atome d'azote compris entre 7 et 10, avantageusement entre 7,5 et 9,5 et au moins un polyamide présentant un nombre moyen d'atomes de carbone par atome d'azote compris entre 9 et 18, avantageusement entre 10 et 18, notamment tels que définis dans le document WO 09/122060.

Dans un mode de réalisation avantageux, la présente invention concerne une structure comprenant au moins une couche (1) telle que définie ci-dessus, une seconde couche (2) telle que définie ci-dessus, les couches (1) et (2) étant susceptibles d'adhérer l'une à l'autre et une couche (3), la couche (3) étant identique à ou différente de la couche (1),
ladite structure comprenant de plus au moins une autre couche (4), la couche (1) étant en contact avec le fluide.

Avantageusement, la couche (4) est une couche d'EVOH.

Dans un mode de réalisation avantageux, la présente invention concerne une structure comprenant au moins une couche (1) telle que définie ci-dessus, et une seconde couche (2) telle que définie ci-dessus, les couches (1) et (2) étant susceptibles d'adhérer l'une à l'autre et une couche (3), la couche (3) étant identique à ou différente de la couche (1) et au moins une autre couche (4), la couche (1) étant en contact avec le fluide, ladite structure comprenant de l'extérieur vers l'intérieur les couches suivantes: (2)//(4)//(3)//(1), la couche (1) étant en contact avec le fluide.

Avantageusement, dans la structure (2)//(4)//(3)//(1), la couche (3) est une couche de liant telle que ci-dessus définie.

Avantageusement, dans la structure (2)//(4)//(3)//(1), la couche (4) est une couche d'EVOH telle que ci-dessus définie.

Avantageusement, dans la structure (2)//(4)//(3)//(1), la couche (3) est une couche de liant telle que ci-dessus définie et la couche (4) est une couche d'EVOH telle que ci-dessus définie.

Avantageusement, la structure est constituée des couches (2)//(4)//(3)//(1) telle que ci-dessus définies.

Dans un mode de réalisation avantageux, la présente invention concerne une structure comprenant au moins une couche (1) telle que définie ci-dessus, une seconde couche (2) telle que définie ci-dessus, les couches (1) et (2) étant susceptibles d'adhérer l'une à l'autre, une couche (3), la couche (3) étant identique à ou différente de la couche (1), au moins une autre couche (4), la couche (1) étant en contact avec le fluide, et comprenant de l'extérieur vers l'intérieur les couches suivantes: (2)//(4)//(3)//(1), la couche (1) étant en contact avec le fluide,

Ladite structure comprenant de plus, une couche de liaison (3'), identique à ou différente de la couche de liaison (3) est présente.

La couche (3') est donc un liant du même type que celui défini ci-dessus pour la couche (3) mais de composition identique ou différente.

Avantageusement, ladite structure comprenant de plus une couche de liaison (3'), comprend de l'extérieur vers l'intérieur les couches suivantes: (2)//(3')//(4)//(3)//(1), la couche (1) étant en contact avec le fluide.

Avantageusement, la couche (1) a une épaisseur de 100 à 200µm, en particulier 150µm, la couche (2) a une épaisseur de 100 à 200µm, en particulier 150µm, la couche (3) a une épaisseur de 200 à 400µm, en particulier 300|jm, la couche (3') a une épaisseur de 200 à 400µm, en particulier 300µm et la couche (4) de 50µm à 150µm, en particulier 100 µm.

Selon un autre aspect, la présente invention concerne des bouteilles, réservoirs, conteneurs, tuyaux et récipients fabriqués avec l'une des structures telles que définies ci-dessus.

Selon un autre aspect, la présente invention concerne des emballages constitués des films fabriqués avec l'une des structures telles que définies ci-dessus.

Selon un autre aspect, la présente invention concerne l'utilisation d'un dcopolyamide BACT/XT dans lequel :
- BACT est une unité à motif amide présente à un taux molaire allant de 20 à 70%, de préférence de 25 à 60%, plus préférentiellement de 35 à 55%, où BAC est choisi parmi la 1,3-bis (aminométhyle) cyclohexyle (1,3 BAC), la 1,4-bis (aminométhyle) cyclohexyle (1,4 BAC) et un mélange de ceux-ci, et T est l'acide téréphtalique,
- XT est une unité à motif amide présente à un taux molaire allant de 30 à 80%, de préférence de 40 à 75%, plus préférentiellement de 45 à 65%, où X est une diamine aliphatique linéaire en C9 à C18, de préférence en C9, C10, C11 et C12, et où T est l'acide téréphtalique, préférentiellement en C10, C11 et C12.
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 10% en mole, par rapport à la quantité totale des monomères utilisés dans le copolyamide, et
- à condition que des unités BACT et XT soient toujours présentes dans ledit polymère polyamide,
pour la fabrication d'une structure, notamment multicouche, comprenant au moins une couche barrière (1) comprenant ledit copolyamide BACT/XT,
ladite structure étant dépourvue de fibres de renfort.

### Exemples :

### 1) Préparation d'un BACT/10T et de polyamides comparatifs

Le mode opératoire suivant est un exemple de procédé de préparation, et n'est pas limitatif. Il est représentatif de toutes les compositions selon l'invention et comparatives:
Dans un réacteur autoclave de 14 litres, on introduit 5 kg des matières premières suivantes
- 500 g d'eau,
- les diamines,
- l'aminoacide (éventuellement),
- l'acide térépthalique et éventuellement un ou des autres diacides,
- le régulateur de chaîne monofonctionnel : acide benzoïque en quantité adaptée à la Mn visée et variant (acide benzoïque) de 50 à 100 g,
- 35 g d'hypophosphite de sodium en solution,
- 0,1 g d'un antimousse WACKER AK1000 (société Wacker Silicones).
La nature et rapports molaires des motifs et structures moléculaires des polyamides (par essai référencé) sont donnés au tableau III ci-dessous.

La 1,3 BAC utilisée présentae un ratio cis/trans de 75/25 mol%.

Le réacteur fermé est purgé de son oxygène résiduel puis chauffé à une température de 230°C par rapport à la matière introduite. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.
La polymérisation est ensuite poursuivie sous balayage d'azote de 20 l/h jusqu'à obtention de la masse Mn visée indiquée au tableau de caractéristiques.
Le polymère est ensuite vidangé par la vanne de fond puis refroidi dans un bac d'eau puis mis sous forme de granulés.
Les produits sont ensuite injectés sous forme de plaque 100 mm x 100 mm x 1 mm à l'aide d'une presse à injecter en utilisant une température d'injection égales à Tf + 20°C et un moule chauffé à 100°C. Les plaques non entièrement cristallisées (présence d'une recristallisation au chauffage DSC selon ISO 11357-2 :2013) sont recuites 2h sous vide à Tg + 30°C.
- La mesure de la viscosité intrinsèque ou inhérente est réalisée dans le m-crésol. La méthode est bien connue de l'homme du métier. On suit la norme ISO 307 :2007 mais en changeant le solvant (utilisation du m-crésol à la place de l'acide sulfurique et la température étant de 20°C).
- La température de transition vitreuse Tg est mesurée à l'aide d'un calorimètre différentiel à balayage (DSC), après un deuxième passage en chauffe, suivant la norme ISO 11357-2 :2013. La vitesse de chauffage et de refroidissement est de 20°C/min.
- La température de fusion Tf et la température de cristallisation Tc sont mesurées par DSC, selon la norme ISO 11357-3 :2013. La vitesse de chauffage et de refroidissement est de 20°C/min.
- L'enthalpie de cristallisation dudit polymère de matrice est mesurée en Calorimétrie Différentielle à Balayage (DSC), après un deuxième passage en chauffe, selon la norme ISO 11357-3 :2013.
- La détermination du taux de fins de chaînes amine et acide est déterminée par potentiométrie.
- Les mesures de perméabilité aux essences sont déterminées à 60°C selon une méthode gravimétrique avec le CE10 : isooctane/toluène/éthanol = 45/45/10 vol.% et le CE85 : isooctane/toluène/éthanol = 7,5/7,5/85 vol.% sur les plaques ci-dessus préparées. La perméabilité instantanée est nulle pendant la période d'induction, puis elle augmente progressivement jusqu'à une valeur à l'équilibre qui correspond à la valeur de perméabilité en régime permanent. Cette valeur obtenue en régime permanent est considérée comme étant la perméabilité du matériau.

Les résultats sont présentés dans le tableau III suivant.

**TABLEAU III**

| Réf | Structure moléculaire / (Composition molaire) | Tf (°C) / Tg (°C) | Tc (°C)/ Tf-Tc (°C) | ΔHc | Viscosité inhérente (m-crésol) | Perméabilité CE10 g.mm/m².24h | Perméabilité CE85 g.mm/m².24h | NH₂ µeq/g |
|---|---|---|---|---|---|---|---|---|
| | | | | | | | | CO₂H µeq/g |
| I1 | BACT/10T (50/50) | 282/153 | 248/33 | 53,5 | 1,05 | 0,3 | 1,7 | 54 |
| | | | | | | | | 67 |
| C1 | MXDT/10T (41/59) | 269/131 | - | - | 1,01 | 0,3 | 2 | 38 |
| | | | | | | | | 134 |
| C2 | 8MT/9T (48/52) | 265/125 | - | - | 1,25 | 0,5 | **3,2** | |
| C3 | (101/10T 33,3/66,6) | 283/107 | 205/78 | 32 | 1,11 | 0,4 | **7** | |
| C4 | 10T/6T/11 (42,5/42,5/15) | 269/114 | - | - | 1,25 | 0,8 | **5** | |
| C5 | 10T/6T/11 (61/24,5/14,5) | 269/111 | 220/49 | 39 | 1,25 | 0,35 | **6** | |
| C6 | 10T/101/11 (64/20,5/15,5) | 265/100 | - | - | 1,15 | **2,75** | **20** | |
| C7 | 11/6T (35/65) | **312**/100 | - | - | 1,21 | 0,65 | **6,7** | |
| C8 | 11/6T (50/50) | 273/79 | - | - | 1,05 | **20** | **76** | |
| C9 | 11/10T (33,3/66,6) | 269/84 | 232/37 | 50 | 1,18 | **3,1** | **13** | |

| | | | | | | | | |
|---|---|---|---|---|---|---|---|---|
| I : Invention C : comparatif | | | | | | | | |

Les structures de l'invention montrent une perméabilité aux essences inférieure à celle des structures comparatives, c'est-à-dire des propriétés barrière aux essences supérieures à celle des structures comparatives.

## Revendications

1. Structure comprenant au moins une couche (1) comprenant un copolyamide BACT/XT dans lequel :
- BACT est une unité à motif amide présente à un taux molaire allant de 20 à 70%, de préférence de 25 à 60%, plus préférentiellement de 35 à 55%, où BAC est choisi parmi la 1,3-bis (aminométhyle) cyclohexyle (1,3 BAC), la 1,4-bis (aminométhyle) cyclohexyle (1,4 BAC) et un mélange de ceux-ci, et T est l'acide téréphtalique,
- XT est une unité à motif amide présente à un taux molaire allant de 30 à 80%, de préférence de 40 à 75%, plus préférentiellement de 45 à 65%, où X est une diamine aliphatique linéaire en C9 à C18, de préférence en C9, C10, C11 et C12, et où T est l'acide téréphtalique, préférentiellement en C10, C11 et C12.
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 10% en mole, par rapport à la quantité totale des monomères utilisés dans le copolyamide, et
- à condition que des unités BACT et XT soient toujours présentes dans ledit polymère polyamide,
la dite structure étant dépourvue de fibres de renfort.

2. Structure selon la revendication 1, dans laquelle ledit copolyamide présente une température de fusion Tf < 290°C, de préférence < 285°C, plus préférentiellement < 280°C, telle que déterminée selon la norme ISO 11357-3 (2013).

3. Structure selon la revendication 1 ou 2, dans laquelle ledit copolyamide présente une température de transition vitreuse Tg > 120°C, de préférence > 130°C, plus préférentiellement > 140°C, déterminée selon la norme ISO 11357-2 :2013.

4. Structure selon l'une des revendications 1 à 3, dans laquelle ledit copolyamide présente un écart entre la température de fusion et la température de cristallisation Tf -Tc < 40°C, préférentiellement < 30°C, déterminé selon la norme ISO 11357-3 :2013.

5. Structure selon l'une des revendications 1 à 4, **caractérisée en ce que** l'enthalpie de cristallisation du copolyamide, mesurée en Calorimétrie Différentielle à Balayage (DSC) selon la Norme ISO 11357-3 :2013, est supérieure à 40 J/g, de préférence supérieure à 45 J/g, plus préférentiellement supérieure à 50 J/g.

6. Structure selon l'une des revendications 1 à 5, dans laquelle la BAC est la 1,3 BAC.

7. Structure selon l'une des revendications 1 à 6, dans laquelle la BAC est la 1,3 BAC et XT est choisi parmi 9T, 10T, 11T et 12T.

8. Structure selon l'une des revendications 1 à 7, dans laquelle XT est 10T, 10 correspondant à la 1,10 décanediamine.

9. Structure selon l'une des revendications 1 à 8, dans laquelle la somme des monomères qui remplacent l'acide téréphtalique, la BAC et X est égale à 0.

10. Structure selon l'une des revendications 1 à 9, dans laquelle ladite couche (1) comprend un modifiant choc et/ou modifiant de type cœur-écorce.

11. Structure selon l'une des revendications 1 à 10, dans laquelle ladite structure est constituée d'une seule couche (1).

12. Structure selon l'une des revendications 1 à 11, dans laquelle ladite couche (1) comprend un stabilisant choisi parmi un stabilisant organique, un stabilisant minéral, en particulier un stabilisant à base de cuivre, et un mélange de ceux-ci.

13. Structure selon l'une des revendications 1 à 12, dans laquelle ladite couche (1) comprend une charge antistatique choisie parmi le noir de carbone, le graphite, en particulier le noir de carbone.

14. Structure selon l'une des revendications 1 à 13, dans laquelle ladite couche (1) comprend au moins un additif choisi parmi un antioxydant, un stabilisant à la chaleur, un absorbeur d'UV, un stabilisant à la lumière, un lubrifiant, une charge inorganique, un agent ignifugeant, un agent nucléant, un plastifiant et un colorant.

15. Structure selon l'une des revendications 1 à 10 et 12 à 14, dans laquelle une seconde couche (2) est présente, les couches (1) et (2) étant susceptibles d'adhérer l'une à l'autre.

16. Structure selon la revendication 15, dans laquelle ladite couche (2) comprend au moins un polyamide choisi parmi un polyamide aliphatique et un polyamide aromatique, en particulier un polyamide aliphatique.

17. Structure selon la revendication 16, dans laquelle ledit polyamide aliphatique est issu de la polycondensation d'au moins un lactame, un acide aminocarboxylique, ou d'une diamine et d'un diacide carboxylique, la diamine étant choisi parmi une diamine aliphatique, une diamine aromatique et une diamine cycloaliphatique et le diacide carboxylique étant choisi parmi un diacide aliphatique, un diacide aromatique et un diacide cycloaliphatique, ou un mélange de ceux-ci.

18. Structure selon l'une des revendications 16 à 17, dans laquelle ledit polyamide aliphatique de la couche (2) est choisi parmi le PA11, le PA12, le PA1010, le PA1012, le PA610 et le PA612.

19. Structure selon l'une des revendications 16 à 18, dans laquelle un autre polyamide, différent de celui de la couche (2) peut être présent dans la couche (2).

20. Structure selon l'une des revendications 15 à 19, dans laquelle un plastifiant est présent dans la couche (2).

21. Structure selon l'une des revendications 15 à 20, dans laquelle un modifiant choc est présent dans la couche (2).

22. Structure selon l'une des revendications 15 à 21, dans laquelle ladite couche (2) comprend un stabilisant choisi parmi un stabilisant organique, un stabilisant minéral, en particulier un stabilisant à base de cuivre, et un mélange de ceux-ci.

23. Structure selon l'une des revendications 15 à 22, dans laquelle la couche (1) comprend un stabilisant organique et la couche (2) comprend un stabilisant minéral, en particulier un stabilisant à base de cuivre.

24. Structure selon l'une des revendications 15 à 22, dans laquelle la couche (1) comprend un stabilisant minéral, en particulier un stabilisant à base de cuivre et la couche (2) comprend un stabilisant organique.

25. Structure selon l'une des revendications 15 à 24, dans laquelle ladite couche (2) comprend une charge antistatique choisie parmi le noir de carbone, le graphite, en particulier le noir de carbone.

26. Structure selon l'une des revendications 15 à 25, dans laquelle ladite couche (2) comprend au moins un additif choisi parmi un antioxydant, un stabilisant à la chaleur, un absorbeur d'UV, un stabilisant à la lumière, un lubrifiant, une charge inorganique, un agent ignifugeant, un agent nucléant et un colorant.

27. Structure selon l'une des revendications 1 à 26, dans laquelle la couche (1) est une couche barrière, notamment à un fluide, ledit fluide étant choisi parmi un carburant, ledit carburant étant une essence, en particulier une bio essence (mélange d'essence et d'alcool, notamment de méthanol ou d'éthanol), ou du diesel en particulier le bio-diesel, une huile, un liquide de frein, des solutions d'urée, un liquide de refroidissement à base de glycol, un gaz, en particulier de l'air comprimé ladite couche barrière (1) étant en contact avec le fluide.

28. Structure selon l'une des revendications 15 à 27, comprenant de plus une couche (3), la couche (3) étant identique à ou différente de la couche (1).

29. Structure selon la revendication 28, dans laquelle la couche (3) est différente de la couche (1) et est une couche de liaison et la structure comprend de l'extérieur vers l'intérieur les couches suivantes: (2)//(3)//(1), la couche (1) étant en contact avec le fluide.

30. Structure selon l'une des revendications 28 à 29, dans laquelle au moins une autre couche (4) est présente, la couche (1) étant en contact avec le fluide.

31. Structure selon la revendication 30, dans laquelle la couche (4) est une couche d'EVOH.

32. Structure selon l'une des revendications 30 à 31, dans laquelle la structure comprend de l'extérieur vers l'intérieur les couches suivantes: (2)//(4)//(3)//(1), la couche (1) étant en contact avec le fluide.

33. Structure selon la revendication 28 à 31, dans laquelle une couche de liaison (3'), identique à ou différente de la couche de liaison (3) est présente.

34. Structure selon la revendication 33, dans laquelle la structure comprend de l'extérieur vers l'intérieur les couches suivantes: (2)//(3')//(4)//(3)//(1), la couche (1) étant en contact avec le fluide.

35. Bouteilles, réservoirs, conteneurs, tuyaux et récipients fabriqués avec la structure selon l'une quelconque des revendications précédentes.

36. Emballages constitués des films fabriqués avec la structure selon l'une quelconque des revendications précédentes.

37. Utilisation d'un copolyamide BACT/XT dans lequel :
- BACT est une unité à motif amide présente à un taux molaire allant de 20 à 70%, de préférence de 25 à 60%, plus préférentiellement de 35 à 55%, où BAC est choisi parmi la 1,3-bis (aminométhyle) cyclohexyle (1,3 BAC), la 1,4-bis (aminométhyle) cyclohexyle (1,4 BAC) et un mélange de ceux-ci, et T est l'acide téréphtalique,
- XT est une unité à motif amide présente à un taux molaire allant de 30 à 80%, de préférence de 40 à 75%, plus préférentiellement de 45 à 65%, où X est une diamine aliphatique linéaire en C9 à C18, de préférence en C9, C10, C11 et C12, et où T est l'acide téréphtalique, préférentiellement en C10, C11 et C12.
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 10% en mole, par rapport à la quantité totale des monomères utilisés dans le copolyamide, et
- à condition que des unités BACT et XT soient toujours présentes dans ledit polymère polyamide,
pour la fabrication d'une structure, notamment multicouche, comprenant au moins une couche barrière (1) comprenant ledit copolyamide BACT/XT,
ladite structure étant dépourvue de fibres de renfort.

## Patentansprüche

1. Struktur, umfassend mindestens eine Schicht (1), umfassend ein BACT/XT-Copolyamid, wobei:
- BACT eine Einheit mit Amideinheit ist, die einen molaren Anteil von 20 bis 70 %, vorzugsweise von 25 bis 60 %, insbesondere von 35 bis 55 % aufweist, wobei BAC ausgewählt ist aus 1,3-Bis(aminomethyl)cyclohexyl (1,3-BAC), 1,4-Bis(aminomethyl)cyclohexyl (1,4-BAC) und einer Mischung davon und T Terephthalsäure ist,
- XT eine Einheit mit Amideinheit ist, die einen molaren Anteil von 30 bis 80 %, vorzugsweise von 40 bis 75 %, insbesondere von 45 bis 65 % aufweist, wobei X ein lineares aliphatisches Diamin C9 bis C18, vorzugsweise C9, C10, C11 und C12 ist, und wobei T Terephthalsäure, vorzugsweise C10, C11 und C12 ist,
- in den BACT- und/oder XT-Einheiten, unabhängig voneinander, bis zu 30 Mol-%, vorzugsweise 20 Mol-%, insbesondere bis zu 10 Mol-% Terephthalsäure, bezogen auf die Gesamtmenge an Dicarbonsäuren, durch andere aromatische, aliphatische oder cycloaliphatische Dicarbonsäuren mit 6 bis 36 Kohlenstoffatomen, insbesondere 6 bis 14 Kohlenstoffatomen, ersetzt sein kann, und
- in den BACT- und/oder XT-Einheiten, unabhängig voneinander, bis zu 30 Mol-%, vorzugsweise 20 Mol-%, insbesondere bis zu 10 Mol-% BAC und/oder gegebenenfalls X, bezogen auf die Gesamtmenge an Diaminen, durch andere Diamine mit 4 bis 36 Kohlenstoffatomen, insbesondere 6 bis 12 Kohlenstoffatomen, ersetzt sein kann, und
- in dem Copolyamid nicht mehr als 30 Mol-%, vorzugsweise nicht mehr als 10 Mol-%, bezogen auf die Gesamtmenge der Monomere, durch Lactame oder Aminocarbonsäuren gebildet sein kann, und
- wobei, vorausgesetzt, dass die Summe der Monomere, die die Terephthalsäure, BAC und X ersetzen, eine Konzentration von 30 Mol-%, vorzugsweise 10 Mol-%, bezogen auf die Gesamtmenge der Monomere, die im Copolyamid verwendet werden, nicht überschreitet, und
- vorausgesetzt, dass die BACT- und XT-Einheiten immer in dem Polyamidpolymer vorhanden sind,
die Struktur frei von Verstärkungsfasern ist.

2. Struktur nach Anspruch 1, wobei das Copolyamid eine Schmelztemperatur Tf < 290 °C, vorzugsweise < 285 °C, insbesondere < 280 °C, wie bestimmt nach der Norm ISO 11357-3 (2013), aufweist.

3. Struktur nach Anspruch 1 oder 2, wobei das Copolyamid eine Glasübergangstemperatur Tg > 120 °C, vorzugsweise > 130 °C, insbesondere > 140 °C, bestimmt nach der Norm ISO 11357-2:2013, aufweist.

4. Struktur nach einem der Ansprüche 1 bis 3, wobei das Copolyamid einen Unterschied zwischen der Schmelztemperatur und der Kristallisationstemperatur Tf-Tc < 40 °C, vorzugsweise < 30 °C, bestimmt nach der Norm ISO 11357-3:2013, aufweist.

5. Struktur nach einem der Ansprüche 1 bis 4, **dadurch gekennzeichnet, dass** die Kristallisationsenthalpie des Copolyamids, gemessen durch Differentialscanningcalorimetrie (DSC) nach der Norm ISO 11357-3:2013, größer als 40 J/g, vorzugsweise größer als 45 J/g, insbesondere größer als 50 J/g ist.

6. Struktur nach einem der Ansprüche 1 bis 5, wobei BAC 1,3-BAC ist.

7. Struktur nach einem der Ansprüche 1 bis 6, wobei BAC 1,3-BAC ist und XT ausgewählt ist aus 9T, 10T, 11T und 12T.

8. Struktur nach einem der Ansprüche 1 bis 7, wobei XT 10T ist, wobei 10 dem 1,10-Decandiamin entspricht.

9. Struktur nach einem der Ansprüche 1 bis 8, wobei die Summe der Monomere, die die Terephthalsäure, BAC und X ersetzen, gleich 0 ist.

10. Struktur nach einem der Ansprüche 1 bis 9, wobei die Schicht (1) einen Schlagzähigkeitsmodifikator und/oder einen Modifikator des Typs des Kern-Schale-Modifikators umfasst.

11. Struktur nach einem der Ansprüche 1 bis 10, wobei die Struktur aus einer einzelnen Schicht (1) gebildet ist.

12. Struktur nach einem der Ansprüche 1 bis 11, wobei die Schicht (1) einen Stabilisator umfasst, der ausgewählt ist aus einem organischen Stabilisator, einem anorganischen Stabilisator, insbesondere einem Stabilisator auf Kupferbasis, und einer Mischung davon.

13. Struktur nach einem der Ansprüche 1 bis 12, wobei die Schicht (1) einen antistatischen Füllstoff umfasst, der ausgewählt ist aus Ruß, Graphit, insbesondere Ruß.

14. Struktur nach einem der Ansprüche 1 bis 13, wobei die Schicht (1) mindestens einen Zusatzstoff umfasst, der ausgewählt ist aus einem Antioxidans, einem Wärmestabilisator, einem UV-Absorber, einem Lichtstabilisator, einem Gleitmittel, einem anorganischen Füllstoff, einem Flammschutzmittel, einem Nucleierungsmittel, einem Weichmacher und einem Farbstoff.

15. Struktur nach einem der Ansprüche 1 bis 10 und 12 bis 14, wobei eine zweite Schicht (2) vorhanden ist, wobei die Schichten (1) und (2) aneinander haften können.

16. Struktur nach Anspruch 15, wobei die Schicht (2) mindestens ein Polyamid umfasst, das ausgewählt ist aus einem aliphatischen Polyamid und einem aromatischen Polyamid, insbesondere einem aliphatischen Polyamid.

17. Struktur nach Anspruch 16, wobei das aliphatische Polyamid aus der Polykondensation von mindestens einem Lactam, einer Aminocarbonsäure oder einem Diamin und einer Dicarbonsäure hervorgegangen ist, wobei das Diamin ausgewählt ist aus einem aliphatischen Diamin, einem aromatischen Diamin und einem cycloaliphatischen Diamin und die Dicarbonsäure ausgewählt ist aus einer aliphatischen Disäure, einer aromatischen Disäure und einer cycloaliphatischen Disäure oder einer Mischung davon.

18. Struktur nach einem der Ansprüche 16 bis 17, wobei das aliphatische Polyamid der Schicht (2) ausgewählt ist aus PA11, PA12, PA1010, PA1012, PA610 und PA612.

19. Struktur nach einem der Ansprüche 16 bis 18, wobei ein anderes Polyamid, das von jenem der Schicht (2) verschieden ist, in der Schicht (2) vorhanden sein kann.

20. Struktur nach einem der Ansprüche 15 bis 19, wobei ein Weichmacher in der Schicht (2) vorhanden ist.

21. Struktur nach einem der Ansprüche 15 bis 20, wobei ein Schlagzähigkeitsmodifikator in der Schicht (2) vorhanden ist.

22. Struktur nach einem der Ansprüche 15 bis 21, wobei die Schicht (2) einen Stabilisator umfasst, der ausgewählt ist aus einem organischen Stabilisator, einem anorganischen Stabilisator, insbesondere einem Stabilisator auf Kupferbasis, und einer Mischung davon.

23. Struktur nach einem der Ansprüche 15 bis 22, wobei die Schicht (1) einen organischen Stabilisator und die Schicht (2) einen anorganischen Stabilisator, insbesondere einen Stabilisator auf Kupferbasis, umfasst.

24. Struktur nach einem der Ansprüche 15 bis 22, wobei die Schicht (1) einen anorganischen Stabilisator, insbesondere einen Stabilisator auf Kupferbasis, und die Schicht (2) einen organischen Stabilisator umfasst.

25. Struktur nach einem der Ansprüche 15 bis 24, wobei die Schicht (2) einen antistatischen Füllstoff umfasst, der ausgewählt ist aus Ruß, Graphit, insbesondere Ruß.

26. Struktur nach einem der Ansprüche 15 bis 25, wobei die Schicht (2) mindestens einen Zusatzstoff umfasst, der ausgewählt ist aus einem Antioxidans, einem Wärmestabilisator, einem UV-Absorber, einem Lichtstabilisator, einem Gleitmittel, einem anorganischen Füllstoff, einem Flammschutzmittel, einem Nucleierungsmittel und einem Farbstoff.

27. Struktur nach einem der Ansprüche 1 bis 26, wobei die Schicht (1) eine Sperrschicht, insbesondere gegen ein Fluid ist, wobei das Fluid aus einem Kraftstoff ausgewählt ist, wobei der Kraftstoff ein Benzin, insbesondere ein Biobenzin (Mischung aus Benzin und Alkohol, insbesondere Methanol oder Ethanol) oder Diesel, insbesondere Biodiesel, ein Öl, eine Bremsflüssigkeit, Harnstofflösungen, ein glykolbasiertes Kühlmittel, ein Gas, insbesondere Druckluft, ist, wobei die Sperrschicht (1) in Kontakt mit dem Fluid steht.

28. Struktur nach einem der Ansprüche 15 bis 27, ferner umfassend eine Schicht (3), wobei die Schicht (3) mit der Schicht (1) identisch oder von dieser verschieden ist.

29. Struktur nach Anspruch 28, wobei die Schicht (3) von der Schicht (1) verschieden ist und eine Verbindungsschicht ist und die Struktur von außen nach innen die folgenden Schichten umfasst: (2)//(3)//(1), wobei die Schicht (1) in Kontakt mit dem Fluid steht.

30. Struktur nach einem der Ansprüche 28 bis 29, wobei mindestens eine andere Schicht (4) vorhanden ist, wobei die Schicht (1) in Kontakt mit dem Fluid steht.

31. Struktur nach Anspruch 30, wobei die Schicht (4) eine EVOH-Schicht ist.

32. Struktur nach einem der Ansprüche 30 bis 31, wobei die Struktur von außen nach innen die folgenden Schichten umfasst: (2)//(4)//(3)//(1), wobei die Schicht (1) in Kontakt mit dem Fluid steht.

33. Struktur nach Anspruch 28 bis 31, wobei eine Verbindungsschicht (3'), die mit der Verbindungsschicht (3) identisch oder von dieser verschieden ist, vorhanden ist.

34. Struktur nach Anspruch 33, wobei die Struktur von außen nach innen die folgenden Schichten umfasst: (2)//(3')//(4)//(3)//(1), wobei die Schicht (1) in Kontakt mit dem Fluid steht.

35. Flaschen, Tanks, Behälter, Rohre und Gefäße, die mit der Struktur nach einem der vorhergehenden Ansprüche hergestellt sind.

36. Verpackungen, die aus Folien gebildet sind, die mit der Struktur nach einem der vorhergehenden Ansprüche hergestellt sind.

37. Verwenden eines BACT/XT-Copolyamids, wobei:
- BACT eine Einheit mit Amideinheit ist, die einen molaren Anteil von 20 bis 70 %, vorzugsweise von 25 bis 60 %, insbesondere von 35 bis 55 % aufweist, wobei BAC ausgewählt ist aus 1,3-Bis(aminomethyl)cyclohexyl (1,3-BAC), 1,4-Bis(aminomethyl)cyclohexyl (1,4-BAC) und einer Mischung davon und T Terephthalsäure ist,
- XT eine Einheit mit Amideinheit ist, die einen molaren Anteil von 30 bis 80 %, vorzugsweise von 40 bis 75 %, insbesondere von 45 bis 65 % aufweist, wobei X ein lineares aliphatisches Diamin C9 bis C18, vorzugsweise C9, C10, C11 und C12 ist, und wobei T Terephthalsäure, vorzugsweise C10, C11 und C12 ist,
- in den BACT- und/oder XT-Einheiten, unabhängig voneinander, bis zu 30 Mol-%, vorzugsweise 20 Mol-%, insbesondere bis zu 10 Mol-% Terephthalsäure, bezogen auf die Gesamtmenge an Dicarbonsäuren, durch andere aromatische, aliphatische oder cycloaliphatische Dicarbonsäuren mit 6 bis 36 Kohlenstoffatomen, insbesondere 6 bis 14 Kohlenstoffatomen, ersetzt sein kann, und
- in den BACT- und/oder XT-Einheiten, unabhängig voneinander, bis zu 30 Mol-%, vorzugsweise 20 Mol-%, insbesondere bis zu 10 Mol-% BAC und/oder gegebenenfalls X, bezogen auf die Gesamtmenge an Diaminen, durch andere Diamine mit 4 bis 36 Kohlenstoffatomen, insbesondere 6 bis 12 Kohlenstoffatomen, ersetzt sein kann, und
- in dem Copolyamid nicht mehr als 30 Mol-%, vorzugsweise nicht mehr als 10 Mol-%, bezogen auf die Gesamtmenge der Monomere, durch Lactame oder Aminocarbonsäuren gebildet sein kann, und
- wobei, vorausgesetzt, dass die Summe der Monomere, die die Terephthalsäure, BAC und X ersetzen, eine Konzentration von 30 Mol-%, vorzugsweise 10 Mol-%, bezogen auf die Gesamtmenge der Monomere, die im Copolyamid verwendet werden, nicht überschreitet, und
- vorausgesetzt, dass die BACT- und XT-Einheiten immer in dem Polyamidpolymer vorhanden sind,
für die Herstellung von einer Struktur, insbesondere einer mehrschichtigen Struktur, die mindestens eine Sperrschicht (1) umfasst, umfassend das BACT/XT-Copolyamid, die Struktur frei von Verstärkungsfasern ist.

## Claims

1. A structure comprising at least one layer (1) comprising a BACT/XT copolyamide wherein:
- BACT is a unit with an amide motif present at a molar content ranging from 20 to 70%, preferably from 25 to 60%, more preferably from 35 to 55%, where BAC is chosen from among 1,3-bis(aminomethyl)cyclohexane (1,3-BAC), 1,4-bis(aminomethyl)cyclohexyl (1,4-BAC) or a mixture thereof, and T is terephthalic acid,
- XT is a unit with an amide motif present at a molar content ranging from 30 to 80%, preferably from 40 to 75%, more preferably from 45 to 65%, where X is a C9 to C18 linear aliphatic diamine, preferably C9, C10, C11 or C12, and where T is terephthalic acid, preferably C10, C11 or C12.
- in the BACT and/or XT units, independently of each other, up to 30 mol%, preferably 20 mol%, particularly up to 10 mol% of terephthalic acid, relative to the total quantity of dicarboxylic acids, can be replaced by other diaromatic, dialiphatic or di(cyclo)aliphatic acids comprising 6 to 36 carbon atoms, particularly 6 to 14 carbon atoms, and
- in the BACT and/or XT units, independently of each other, up to 30 mol%, preferably 20 mol%, particularly up to 10 mol%, of the BAC and/or if applicable X, relative to the total diamine quantity, can be replaced by other diamines comprising from 4 to 36 carbon atoms, particularly 6 to 12 carbon atoms, and
- in the copolyamide, not more than 30 mol%, preferably not more than 10 mol%, relative to the total quantity of the monomers, can be formed by lactams or aminocarboxylic acids, and
- provided that the sum of the monomers that replace terephthalic acid, BAC and X does not exceed a concentration of 30 mol%, preferably 10 mol%, relative to the total quantity of the monomers used in the copolyamide, and
- provided that BACT and XT units are still present in said polyamide polymer,
said structure being devoid of strengthening fibers.

2. The structure according to claim 1, wherein said copolyamide has a melting temperature Tm < 290°C, preferably < 285°C, more preferably < 280°C, as determined according to standard ISO 11357-3 (2013).

3. The structure according to claim 1 or 2, wherein said copolyamide has a glass transition temperature Tg > 120°C, preferably > 130°C, more preferably > 140°C, determined according to standard ISO 11357-2:2013.

4. The structure according to any one of claims 1 to 3, wherein said copolyamide has a difference between the melting temperature and the crystallization temperature Tm -Tc < 40°C, preferably < 30°C, determined according to standard ISO 11357-3:2013.

5. The structure according to one of claims 1 to 4, **characterized in that** the enthalpy of crystallization of the copolyamide, measured by differential scanning calorimetry (DSC) according to standard ISO 11357-3:2013, is greater than 40 J/g, preferably greater than 45 J/g, more preferably greater than 50 J/g.

6. The structure according to one of claims 1 to 5, wherein the BAC is 1,3-BAC.

7. The structure according to one of claims 1 to 6, wherein the BAC is 1,3-BAC and XT is chosen from 9T, 10T, 11T and 12T.

8. The structure according to one of claims 1 to 7, wherein the XT is 10T, 10 corresponding to 1,10-decanediamine.

9. The structure according to one of claims 1 to 8, wherein the sum of the monomers that replace terephthalic acid, BAC and X is equal to 0.

10. The structure according to one of claims 1 to 9, wherein said layer (1) comprises an impact modifier and/or a core-shell type modifier.

11. The structure according to one of claims 1 to 10, wherein said structure is formed of a single layer (1).

12. The structure according to one of claims 1 to 11, wherein said layer (1) comprises a stabilizer chosen from an organic stabilizer, an inorganic stabilizer, particularly a stabilizer containing copper, or a mixture thereof.

13. The structure according to one of claims 1 to 12, wherein said layer (1) comprises an antistatic filler chosen from carbon black and graphite, particularly carbon black.

14. The structure according to one of claims 1 to 13, wherein said layer (1) comprises at least one additive chosen from an antioxidant, a heat stabilizer, a UV absorber, a light stabilizer, a lubricant, an inorganic filler, a flame retardant, a nucleating agent, a plasticizer and a colorant.

15. The structure according to one of claims 1 to 10 and 12 to 14, wherein a second layer (2) is present, where layers (1) and (2) could adhere to one another.

16. The structure according to claim 15, wherein said layer (2) comprises at least one polyamide chosen from an aliphatic polyamide and an aromatic polyamide, particularly an aliphatic polyamide.

17. The structure according to claim 16, wherein said aliphatic polyamide is from the polycondensation of at least one lactam, an aminocarboxylic acid, or of a diamine and a dicarboxylic acid, the diamine being chosen from an aliphatic diamine, an aromatic diamine and a cycloaliphatic diamine and the dicarboxylic acid being chosen from an dialiphatic acid, a diaromatic acid and a di(cyclo)aliphatic acid, or a mixture of those.

18. The structure according to one of claims 16 to 17, wherein said aliphatic polyamide of layer (2) is chosen from PA11, PA12, PA1010, PA1012, PA610 and PA612.

19. The structure according to one of claims 16 to 18, wherein another polyamide, different than that of layer (2) can be present in layer (2).

20. The structure according to one of claims 15 to 19, wherein a plasticizer is present in layer (2).

21. The structure according to one of claims 15 to 20, wherein an impact modifier is present in layer (2).

22. The structure according to one of claims 15 to 21, wherein said layer (2) comprises a stabilizer chosen from an organic stabilizer, an inorganic stabilizer, particularly a stabilizer containing copper, or a mixture thereof.

23. The structure according to one of claims 15 to 22, wherein the layer (1) comprises an organic stabilizer and the layer (2) comprises an inorganic stabilizer, particularly a stabilizer containing copper.

24. The structure according to one of claims 15 to 22, wherein the layer (1) comprises an inorganic stabilizer, particularly a stabilizer containing copper and the layer (2) comprises an organic stabilizer.

25. The structure according to one of claims 15 to 24, wherein said layer (2) comprises an antistatic filler chosen from carbon black and graphite, particularly carbon black.

26. The structure according to one of claims 15 to 25, wherein said layer (2) comprises at least one additive chosen from an antioxidant, a heat stabilizer, a UV absorber, a light stabilizer, a lubricant, an inorganic filler, a flame retardant, a nucleating agent, a plasticizer and a colorant.

27. The structure according to one of claims 1 to 26, wherein the layer (1) is a barrier layer, in particular to a fluid, said fluid being chosen from a fuel, said fuel being a gasoline, particularly a bio-gasoline (mixture of gasoline and alcohol, in particular of methanol or ethanol), or of diesel, particularly bio-diesel, an oil, a brake fluid, urea solutions, a cooling liquid containing glycol, a gas, particularly compressed air, said barrier layer (1) is in contact with the fluid.

28. The structure according to one of claims 15 to 27, also comprising a layer (3), the layer (3) being identical or different from layer (1).

29. The structure according to claim 28, wherein layer (3) is different from layer (1) and is a bonding layer and the structure comprises from the outside to the inside the following layers: (2)//(3)//(1), layer (1) being in contact with the fluid.

30. The structure according to one of claims 28 to 29, wherein at least one other layer (4) is present, the layer (1) being in contact with the fluid.

31. The structure according to claim 30, wherein the layer (4) is a layer of EVOH.

32. The structure according to one of claims 30 to 31, wherein the structure comprises from the outside to the inside the following layers: (2)//(4)//(3)//(1), layer (1) being in contact with the fluid.

33. The structure according to claim 28 to 31, wherein a bonding layer (3'), identical or different from bonding layer (3), is present.

34. The structure according to claim 33, wherein the structure comprises from the outside to the inside the following layers: (2)//(3')//(4)//(3)//(1), layer (1) being in contact with the fluid.

35. Bottles, tanks, containers, tubing and vessels made with the structure according to any one of the previous claims.

36. Packaging made with the structure according to any one of the previous claims.

37. Use of a BACT/XT copolyamide wherein:
- BACT is a unit with an amide motif present at a molar content ranging from 20 to 70%, preferably from 25 to 60%, more preferably from 35 to 55%, where BAC is chosen from among 1,3-bis(aminomethyl)cyclohexane (1,3-BAC), 1,4-bis(aminomethyl)cyclohexyl (1,4-BAC) or a mixture thereof, and T is terephthalic acid,
- XT is a unit with an amide motif present at a molar content ranging from 30 to 80%, preferably from 40 to 75%, more preferably from 45 to 65%, where X is a C9 to C18 linear aliphatic diamine, preferably C9, C10, C11 or C12, and where T is terephthalic acid, preferably C10, C11 or C12.
- in the BACT and/or XT units, independently of each other, up to 30 mol%, preferably 20 mol%, particularly up to 10 mol% of terephthalic acid, relative to the total quantity of dicarboxylic acids, can be replaced by other diaromatic, dialiphatic or di(cyclo)aliphatic acids comprising 6 to 36 carbon atoms, particularly 6 to 14 carbon atoms, and
- in the BACT and/or XT units, independently of each other, up to 30 mol%, preferably 20 mol%, particularly up to 10 mol%, of the BAC and/or if applicable X, relative to the total diamine quantity, can be replaced by other diamines comprising from 4 to 36 carbon atoms, particularly 6 to 12 carbon atoms, and
- in the copolyamide, not more than 30 mol%, preferably not more than 10 mol%, relative to the total quantity of the monomers, can be formed by lactams or aminocarboxylic acids, and
- provided that the sum of the monomers that replace terephthalic acid, BAC and X does not exceed a concentration of 30 mol%, preferably 10 mol%, relative to the total quantity of the monomers used in the copolyamide, and
- provided that BACT and XT units are still present in said polyamide polymer,
for manufacturing a structure, in particular a multilayer structure, comprising at least one barrier layer (1) comprising said BACT/XT copolyamide,
said structure being devoid of strengthening fibers.
